# FASCICULE DE BREVET EUROPEEN

(11) **EP 3 086 931 B1**
(45) Date de publication et mention de la délivrance du brevet: **01.05.2019**
(21) Numéro de dépôt: 14828242.9
(22) Date de dépôt: 18.12.2014
(51) Int. Cl.: B29D 30/54, B29C 65/34

(54) **PROCÉDÉS DE FABRICATION ET DE RECHAPAGE D'UNE ENVELOPPE DE PNEUMATIQUE ET ENVELOPPES DE PNEUMATIQUE.**
VERFAHREN ZUR HERSTELLUNG EINES REIFENGEHÄUSES UND ZUR REIFENRUNDERNEUERUNG UND REIFENGEHÄUSE.
METHODS FOR MANUFACTURING AND RETREADING TIRE AND TIRE CASINGS.

(30) Priorité: 23.12.2013 FR 1363448
(43) Date de publication de la demande: 02.11.2016
(73) Titulaire: Compagnie Générale des Etablissements Michelin, 63000 Clermont-Ferrand (FR)
(72) Inventeur: MARCET, Grégory, F-63040 Clermont-Ferrand Cedex 9 (FR); HINC, Henri, F-63040 Clermont-Ferrand Cedex 9 (FR); MERINO LOPEZ, José, F-63040 Clermont-Ferrand Cedex 9 (FR); DELBOS, Mathieu, F-63040 Clermont-Ferrand Cedex 9 (FR)
(74) Mandataire: Redouté, Gilles Pierre
(86) Numéro de dépôt international: PCT/FR2014/053411
(87) Numéro de publication internationale: WO 2015/097371

(56) Documents cités:
- WO-A1-99/08860
- WO-A1-2013/029974
- AU-A- 8 292 875
- FR-A1- 2 988 644
- GB-A- 1 477 317
- GB-A- 1 487 426
- US-A- 3 894 897
- US-A1- 2010 032 072
- US-A1- 2011 056 603
- US-A1- 2012 006 461

## Description

L'invention concerne le rechapage des pneumatiques.

L'opération de rechapage consiste classiquement à éliminer la bande de roulement usée d'une enveloppe de pneumatique pour la remplacer par une bande de roulement neuve. Dans le domaine du rechapage, il est connu, notamment par les documents US-3 894 897, AU-8292875, GB-1 477 317, de doter le pneumatique d'une couche de liaison permettant de lier la bande de roulement à la carcasse. Il est par ailleurs connu de doter le pneumatique d'une couche de liaison en matériau thermofusible liant la bande de roulement à la carcasse. En vue du rechapage, on applique cette couche sur une carcasse de pneumatique. On pose ensuite une bande de roulement compatible avec une utilisation sur une roue. On chauffe ensuite cette couche jusqu'à une température prédéterminée caractéristique du matériau, puis on la laisse refroidir. En refroidissant, la couche assure l'adhésion de la bande de roulement à la carcasse. L'opération de chauffage peut être effectuée avant assemblage, par exemple par infrarouge ou par convection forcée, ou après assemblage, par exemple par conduction de contact, conduction électrique, convection forcée, induction à haute fréquence ou micro-ondes.

Lors du chauffage, on doit appliquer une pression sur la bande de roulement pour plaquer fermement la couche de liaison entre la bande et la carcasse. Ce moyen de pression doit être compatible avec le moyen de chauffage retenu, c'est-à-dire ne pas nuire à la conduction ou à la convection du flux thermique ou à une quelconque connectique qui sortirait d'un moyen de chauffage intégré au pneumatique, ou encore doit être transparent au rayonnement électromagnétique, à l'induction hautes fréquences ou aux micro-ondes.

L'invention a pour but de faciliter le chauffage et la mise en pression de la couche de liaison thermofusible.

A cet effet, on prévoit selon l'invention un procédé de fabrication d'une enveloppe de pneumatique dans lequel on dispose à l'intérieur de l'enveloppe au moins un fil conducteur de l'électricité et formant des spires centrées sur un axe principal de l'enveloppe, et une couche de liaison.

Ainsi le fil permet le chauffage par effet Joule de la couche de liaison en vue d'un rechapage de l'enveloppe. De plus, l'orientation du fil assure le renfort de l'enveloppe et permet à la partie qui le porte de mieux résister à la mise en pression, et permet la mise sous pression de la couche thermofusible. Le fil a aussi un rôle de frettage mécanique dans l'enveloppe lors du roulage.

Avantageusement, le fil est métallique.

De préférence, la couche de liaison comprend un matériau thermofusible, préférentiellement un élastomère thermoplastique.

Selon un mode de réalisation, on munit une carcasse de l'enveloppe d'une nappe de renfort distincte du fil.

Ainsi, l'enveloppe dispose d'une nappe de renfort sécuritaire en plus du fil chauffant. Il s'agit par exemple d'une nappe à angle compris préférentiellement, en valeur absolue, entre 0 et 20°, et plus préférentiellement entre 0 et 10°, par rapport à la direction longitudinale. Celle-ci permet de minimiser les conséquences d'une défaillance de la couche de liaison. En effet, en l'absence de nappe de renfort, si la bande porte le fil sur sa surface interne et se désolidarise du reste de l'enveloppe, ce dernier n'est alors plus fretté.

Selon un mode de réalisation, on incorpore le fil à une bande de roulement de l'enveloppe.

Le fil est alors très proche de la couche de liaison thermofusible, ce qui permet de chauffer localement cette dernière et d'éviter une surcuisson ou une recuisson indésirée des gommes des différentes parties de l'enveloppe.

Selon un autre mode de réalisation, on incorpore le fil à la couche de liaison.

Ainsi, la durée du chauffage est réduite car il n'est pas nécessaire que la chaleur diffuse à travers la gomme. De plus, la température que doit atteindre le fil dans le but de ramollir la couche de liaison est plus faible et la durée de chauffage est plus courte que s'il était placé dans la gomme, à l'extérieur de la couche.

On prévoit aussi selon l'invention une enveloppe de pneumatique qui comprend à l'intérieur de l'enveloppe au moins un fil conducteur de l'électricité et formant des spires centrées sur un axe principal de l'enveloppe, et une couche de liaison comprenant un matériau thermofusible.

On prévoit également selon l'invention un procédé de rechapage d'une enveloppe de pneumatique dans lequel on chauffe une couche de liaison au moyen d'un fil parcouru par un courant électrique, s'étendant à l'intérieur de l'enveloppe et formant des spires centrées sur un axe principal de l'enveloppe.

On entraîne ainsi le ramollissement de la couche de liaison.

Dans un mode de réalisation, on monte une carcasse de l'enveloppe sur une jante.

Dans un mode de réalisation, on installe sur une carcasse une bande de roulement dans laquelle est incorporé le fil.

Avantageusement, on gonfle la carcasse.

Ainsi, le gonflage de la carcasse entraîne une augmentation de son volume. La carcasse et la bande de roulement plaquent fermement entre elles la couche de liaison.

De préférence, on maintient la carcasse à l'état gonflé pendant un refroidissement de l'enveloppe

En laissant ainsi refroidir la couche de liaison, elle crée l'adhésion de ces deux pièces.e pression sur une surface extérieure de l'enveloppe vers l'intérieur de celle-ci.

On met la couche de liaison sous pression de cette manière notamment si la carcasse comprend une nappe de renfort.

De préférence, on maintient la pression à l'extérieur de l'enveloppe pendant un refroidissement de l'enveloppe.

On prévoit aussi selon l'invention une bande de roulement de pneumatique en anneau fermé, dépourvue de carcasse d'enveloppe et qui comprend au moins un fil conducteur de l'électricité et formant des spires centrées sur un axe principal de la bande.

Ce produit intermédiaire convient pour mettre en oeuvre le procédé de l'invention.

On prévoit enfin selon l'invention une enveloppe de pneumatique qui a fait l'objet d'un procédé de rechapage selon l'invention.

Nous allons maintenant présenter plusieurs modes de réalisation de l'invention à l'appui des dessins annexés sur lesquels :
- la figure 1 est une vue en section axiale d'une enveloppe de pneumatique selon un mode de réalisation de l'invention,
- la figure 2 est une vue à plus grande échelle d'une partie de l'enveloppe de la figure 1,
- la figure 3 est une vue similaire à celle de la figure 2 selon un autre mode de réalisation, et
- la figure 4 est une vue en section axiale d'une enveloppe de pneumatique selon un autre mode de réalisation de l'invention.

Nous allons décrire un mode de mise en oeuvre de l'invention, qui consiste en la fabrication d'une enveloppe de pneumatique de roue.

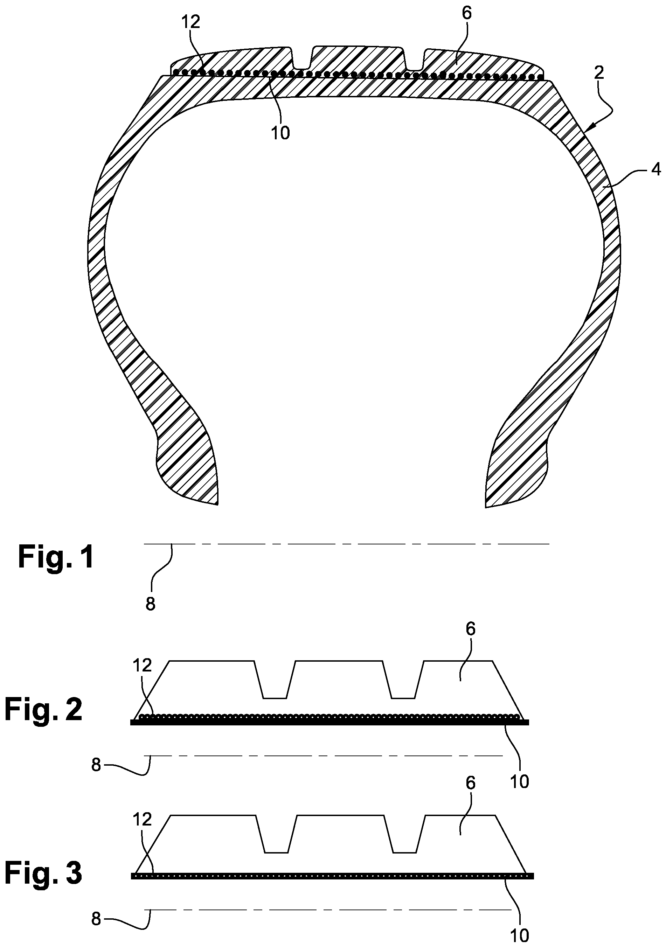

En référence à la figure 1, une ébauche d'enveloppe 2 comprend une ébauche de carcasse 4 en gomme crue et une ébauche de bande de roulement 6 en gomme crue en anneau fermé portée par la carcasse du côté de celle-ci le plus éloigné d'un axe principal 8 de l'enveloppe. L'ébauche d'enveloppe comprend également une couche de liaison 10 interposée suivant la direction radiale à l'axe 8 entre la carcasse 4 et la bande de roulement 6. En l'espèce, il s'agit d'une couche réalisée dans un matériau thermofusible. Par matériau thermofusible on comprend un matériau apte à se ramollir lorsqu'il est soumis à un chauffage pour le porter à une température prédéterminée caractéristique dudit matériau thermofusible, dite température de ramollissement. Par exemple, un tel matériau thermofusible peut être choisi parmi les élastomères thermoplastiques tels que le SBS (styrène-butadiène-styrène) ou le SIS (styrène-isoprène-styrène). Pour les besoins de l'invention, on se réfère à un matériau thermofusible capable de ramollir à une température comprise entre 140°C et 200°C.

En référence à la figure 2, on incorpore un fil 12 en matériau inextensible et conducteur d'électricité à la bande de roulement 6. On dispose ce fil de sorte qu'il forme des spires centrées sur l'axe principal 8 de l'enveloppe. Les spires recouvrent toute la largeur et toute la circonférence de l'enveloppe, et forment une nappe à une couche.

On cuit ensuite l'ensemble, dans une étuve et dans un moule par exemple, jusqu'à la vulcanisation de la gomme. On obtient ainsi une enveloppe de pneumatique.

L'enveloppe est ensuite apte à être montée sur un véhicule.

Nous allons maintenant décrire la mise en oeuvre d'un second procédé, qui consiste à rechaper une telle enveloppe de pneumatique. Ce procédé s'applique donc à une enveloppe 2 issue du procédé précédemment décrit. On suppose que la bande de roulement 6 doit être retirée de l'enveloppe, par exemple parce qu'elle présente un niveau d'usure incompatible avec une utilisation sur une roue.

Pour ce faire, dans le but de chauffer le fil 12, on connecte les deux extrémités de ce dernier à une source de courant qui n'est pas illustrée ici. A cette fin, on peut prévoir que les deux extrémités font légèrement saillie sur un flanc de l'enveloppe pour faciliter cette connexion ou bien qu'on entame la bande de roulement pour accéder aux extrémités. Le fil parcouru par le courant chauffe ainsi par effet Joule la couche de liaison 10. On comprend bien que le motif que présente le fil permet au courant de le parcourir intégralement, ce qui rend son chauffage quasiment homogène.

Une fois qu'une température prédéterminée fonction de la couche de liaison est atteinte, celle-ci fond et perd son pouvoir d'adhésion. On peut alors agripper la bande et la séparer intégralement du reste de l'enveloppe par pelage.

Il s'agit ensuite de rechaper l'enveloppe. Il est nécessaire pour cela de poser sur l'enveloppe une nouvelle bande de roulement en gomme cuite, en anneau fermé, soit neuve, soit présentant un niveau d'usure compatible avec son utilisation sur une roue.

Pour ce faire, on monte la carcasse 4 sur une jante qui n'est pas illustrée ici, puis on applique dessus la couche de liaison 10 et une nouvelle bande de roulement 6 en gomme cuite et en anneau fermé. Un fil 12 est incorporé dans la bande de roulement comme précédemment.

Il faut ensuite plaquer fermement la couche de liaison entre la bande et la carcasse en vue de son chauffage. Il suffit pour cela de gonfler la carcasse à une pression suffisamment élevée, par exemple supérieure à 2 bars, soit 2.10⁵ Pa, voire supérieure à 3 bars, soit 3.10⁵ Pa. Étant donné que le fil est inextensible, il contraint la carcasse à un diamètre fixe. De ce fait, la couche de liaison est fermement prise entre la carcasse et la bande de roulement grâce à la pression de gonflage d'une part et au fil d'autre part.

Une fois la couche de liaison sous pression, on fait passer comme précédemment un courant dans le fil dans le but de le chauffer par effet Joule, jusqu'à une température supérieure à la température caractéristique prédéterminée du matériau constituant la couche. Cette dernière se ramollit alors. Il est avantageux de maintenir la position relative de la bande de roulement par rapport à la carcasse à l'aide d'un dispositif (non illustré) qui la fige et empêche ainsi tout déplacement latéral de la bande de roulement.

En laissant ensuite refroidir la couche de liaison, on crée l'adhérence de la bande de roulement à la carcasse.

On peut alors dégonfler l'enveloppe et la retirer de la jante.

L'enveloppe peut alors être montée sur une roue.

Lors du roulage, la nappe a aussi un rôle de frettage et de renfort.

Dans une variante de l'invention, illustrée en figure 3, on met en oeuvre à l'identique les procédés décrits précédemment, à la seule différence que le fil 12 est incorporé non pas à la bande de roulement 6 mais à la couche de liaison 10. Cet arrangement a pour avantage de réduire la durée du chauffage de la couche de liaison, puisque la chaleur n'a pas à diffuser à travers la gomme, et la température que doit atteindre le fil dans le but de ramollir la couche de liaison. De plus, il n'est pas nécessaire d'installer un nouveau fil après le pelage de la bande de roulement usée, puisque la couche de liaison maintenue par le fil reste en place sur la carcasse.

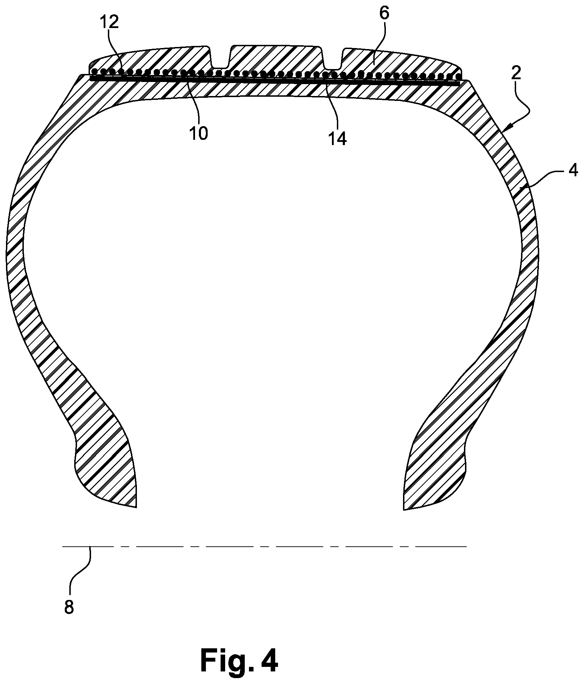

Dans une autre variante de l'invention, illustrée en figure 4, on munit la partie sommet de la carcasse d'une nappe de renfort 14, distincte du fil 12, qui a un rôle de frettage mécanique de l'enveloppe lors du roulage. A titre d'exemple, cette nappe peut comprendre des éléments de renfort formant un angle faible (inférieur à 6°) avec la direction longitudinale tels que des câbles métalliques (en acier par exemple) ou des câbles textiles (en polyester, nylon, rayonne, en polynaphtalate d'éthylène (PEN) ou aramide par exemple) noyés dans une matrice de mélange de caoutchouc non thermofusible. La somme des résistances de la nappe 14 et du fil 12 est supérieure ou égale à celle d'une nappe classique. Pour un pneumatique de dimensions 205/55 R16, la somme des résistances est supérieure à 150 daN.cm⁻¹, soit 1,5.10⁵ N.m⁻¹, et préférentiellement supérieure à 200 daN.cm⁻¹, soit 2.10⁵ N.m⁻¹. La résistance de la nappe 14 seule étant préférentiellement inférieure à 60% de celle d'une nappe de frettage classique, elle doit être inférieure à 120 daN.cm⁻¹, soit 1,2.10⁵ N.m⁻¹.

Avec la présence de la nappe de renfort 14, on peut mettre en oeuvre les procédés décrit précédemment quasiment à l'identique, seule l'étape de mise en pression de la couche de liaison 10 diffère.

En effet, dans ce mode de réalisation, c'est la nappe de renfort 14 qui limite l'expansion de la carcasse et non plus le fil 12. Par conséquent, la contrainte transmise est insuffisante pour mettre en pression la couche de liaison. Pour pallier ce problème, on applique une pression de préférence supérieure à 1 bar, soit 1.10⁵ Pa, sur la bande de roulement 6 vers l'intérieur de l'enveloppe 2, par exemple au moyen d'une micro-enceinte ou d'un autoclave, ou par bobinage. La couche de liaison est alors fermement prise entre la carcasse 4 et la bande de roulement 6 grâce à la pression de gonflage d'une part et à la pression extérieure d'autre part. On peut par la suite suivre les mêmes étapes que celles décrites précédemment.

Bien entendu, on pourra apporter à l'invention de nombreuses modifications sans sortir du cadre de celle-ci.

La couche de liaison peut comporter un matériau thermofusible autre qu'un élastomère thermoplastique.

Par exemple, la couche de liaison peut être une gomme de liaison, auquel cas il n'est pas nécessaire de la faire refroidir sous pression après qu'elle a été chauffée en vue du rechapage.

La carcasse peut présenter une toute autre architecture et d'autres dimensions.

Le fil peut être remplacé par une pluralité de fils.

## Revendications

1. Procédé de fabrication d'une enveloppe (2) de pneumatique, **caractérisé en ce qu'**on dispose à l'intérieur de l'enveloppe au moins un fil (12) conducteur de l'électricité et formant des spires centrées sur un axe principal (8) de l'enveloppe, et une couche de liaison (10).

2. Procédé selon la revendication précédente, dans lequel le fil est métallique.

3. Procédé selon au moins l'une quelconque des revendications précédentes, dans lequel la couche de liaison comprend un matériau thermofusible, préférentiellement un élastomère thermoplastique.

4. Procédé la revendication précédente, dans lequel on munit une carcasse (4) de l'enveloppe d'une nappe de renfort (14) distincte du fil.

5. Procédé selon au moins l'une quelconque des revendications précédentes, dans lequel on incorpore le fil à une bande de roulement (6) de l'enveloppe.

6. Procédé selon au moins l'une quelconque des revendications 1 à 4, dans lequel on incorpore le fil à la couche de liaison.

7. Enveloppe (2) de pneumatique, **caractérisée en ce qu'**elle comprend à l'intérieur de l'enveloppe au moins un fil (12) conducteur de l'électricité et formant des spires centrées sur un axe principal (8) de l'enveloppe et une couche de liaison (10) comprenant un matériau thermofusible.

8. Procédé de rechapage d'une enveloppe (2) de pneumatique, **caractérisé en ce qu'**on chauffe une couche de liaison (10) au moyen d'un fil (12) parcouru par un courant électrique, s'étendant à l'intérieur de l'enveloppe et formant des spires centrées sur un axe principal (8) de l'enveloppe.

9. Procédé selon la revendication précédente, dans lequel on monte une carcasse (4) de l'enveloppe sur une jante.

10. Procédé selon au moins l'une quelconque des revendications 8 à 9, dans lequel on installe sur une carcasse (4) une bande de roulement (6) dans laquelle est incorporé le fil.

11. Procédé selon au moins l'une quelconque des revendications 9 à 10, dans lequel on gonfle la carcasse.

12. Procédé selon la revendication précédente, dans lequel on maintient la carcasse à l'état gonflé pendant un refroidissement de l'enveloppe.

13. Procédé selon au moins l'une quelconque des revendications 8 à 12, dans lequel on applique une pression sur une surface extérieure de l'enveloppe vers l'intérieur de celle-ci.

14. Procédé selon les revendications 11 à 13, dans lequel on maintient la pression à l'extérieur de l'enveloppe pendant un refroidissement de l'enveloppe.

15. Enveloppe (2) de pneumatique, **caractérisée en ce qu'**elle a fait l'objet d'un procédé de rechapage selon au moins l'une quelconque des revendications 8 à 14.

16. Bande de roulement (6) de pneumatique en anneau fermé et dépourvue de carcasse d'enveloppe, **caractérisée en ce qu'**elle comprend au moins un fil (12) conducteur de l'électricité et formant des spires centrées sur un axe principal de la bande.

## Patentansprüche

1. Verfahren zur Herstellung eines Reifenmantels (2), **dadurch gekennzeichnet, dass** im Inneren des Mantels mindestens ein Draht (12), der Elektrizität leitet und Windungen bildet, die auf einer Hauptachse (8) des Mantels zentriert sind, und eine Verbindungsschicht (10) angeordnet werden.

2. Verfahren nach dem vorhergehenden Anspruch, wobei der Draht metallisch ist.

3. Verfahren nach mindestens einem der vorhergehenden Ansprüche,
wobei die Verbindungsschicht ein wärmeschmelzbares Material, vorzugsweise ein thermoplastisches Elastomer, umfasst.

4. Verfahren nach dem vorhergehenden Anspruch,
wobei eine Karkasse (4) des Mantels mit einer von dem Draht verschiedenen Verstärkungsmatte (14) versehen wird.

5. Verfahren nach mindestens einem der vorhergehenden Ansprüche,
wobei der Draht in eine Lauffläche (6) des Mantels eingeschlossen wird.

6. Verfahren nach mindestens einem der Ansprüche 1 bis 4,
wobei der Draht in die Verbindungsschicht eingeschlossen wird.

7. Reifenmantel (2),
**dadurch gekennzeichnet, dass** dieser im Inneren des Mantels mindestens einen Draht (12), der Elektrizität leitet und Windungen bildet, die auf einer Hauptachse (8) des Mantels zentriert sind, und eine Verbindungsschicht (10) umfasst, die ein wärmeschmelzbares Material umfasst.

8. Verfahren zur Runderneuerung eines Reifenmantels (2),
**dadurch gekennzeichnet, dass** eine Verbindungsschicht (10) mit einem Draht (12) erwärmt wird, durch den ein elektrischer Strom fließt, der sich im Inneren des Mantels erstreckt, und der Windungen bildet, die auf einer Hauptachse (8) des Mantels zentriert sind.

9. Verfahren nach dem vorhergehenden Anspruch,
wobei eine Karkasse (4) des Mantels auf einer Felge montiert wird.

10. Verfahren nach mindestens einem der Ansprüche 8 bis 9,
wobei auf einer Karkasse (4) eine Lauffläche (6) installiert wird, in welcher der Draht eingeschlossen ist.

11. Verfahren nach mindestens einem der Ansprüche 9 bis 10,
wobei die Karkasse aufgepumpt wird.

12. Verfahren nach dem vorhergehenden Anspruch,
wobei die Karkasse während eines Abkühlens des Mantels aufgepumpt gehalten wird.

13. Verfahren nach mindestens einem der Ansprüche 8 bis 12,
wobei ein Druck auf eine Außenfläche des Mantels zum Inneren desselben ausgeübt wird.

14. Verfahren nach der Ansprüche 11 bis 13,
wobei der Druck an der Außenseite des Mantels während eines Abkühlens des Mantels aufrechterhalten wird.

15. Reifenmantel (2),
**dadurch gekennzeichnet, dass** dieser einem Runderneuerungsverfahren nach mindestens einem der Ansprüche 8 bis 14 unterzogen wurde.

16. Lauffläche (6) in Form eines geschlossenen Rings und ohne Mantelkarkasse,
**dadurch gekennzeichnet, dass** diese mindestens einen Draht (12) umfasst, der Elektrizität leitet und Windungen bildet, die auf einer Hauptachse der Fläche zentriert sind.

## Claims

1. Method for manufacturing a tyre casing (2), **characterized in that** at least one electrically conductive wire (12) forming turns centred on a main axis (8) of the casing, and a bonding layer (10) are disposed inside the casing.

2. Method according to the preceding claim, wherein the wire is metal.

3. Method according to at least either one of the preceding claims, wherein the bonding layer comprises a hot-melt material, preferably a thermoplastic elastomer.

4. Method according to the preceding claim, wherein a carcass (4) of the casing is provided with a reinforcement ply (14) separate from the wire.

5. Method according to at least any one of the preceding claims, wherein the wire is incorporated into a tread (6) of the casing.

6. Method according to at least any one of Claims 1 to 4, wherein the wire is incorporated into the bonding layer.

7. Tyre casing (2), **characterized in that** it comprises, inside the casing, at least one wire (12) forming turns centred on a main axis (8) of the casing, and a bonding layer (10) comprising a hot-melt material.

8. Method for retreading a tyre casing (2), **characterized in that** a bonding layer (10) is heated by means of a wire (12) through which an electric current passes, said wire extending inside the casing and forming turns centred on a main axis (8) of the casing.

9. Method according to the preceding claim, wherein a carcass (4) of the casing is mounted on a rim.

10. Method according to at least either one of Claims 8 and 9, wherein a tread (6) is fitted on a carcass (4), the wire being incorporated into said tread (6).

11. Method according to at least either one of Claims 9 and 10, wherein the carcass is inflated.

12. Method according to the preceding claim, wherein the carcass is kept in the inflated state while the casing is cooled.

13. Method according to at least any one of Claims 8 to 12, wherein pressure is applied to an outer surface of the casing towards the inside thereof.

14. Method according to Claims 11 to 13, wherein the pressure outside the casing is maintained while the casing is cooled.

15. Tyre casing (2), **characterized in that** it has undergone a retreading method according to at least any one of Claims 8 to 14.

16. Tyre tread (6) which is in the form of a closed ring and does not have a casing carcass, **characterized in that** it comprises at least one electrically conductive wire (12) forming turns centred on a main axis of the tread.
